# EUROPEAN PATENT APPLICATION

(11) **EP 4 203 492 A1**
(43) Date of publication of application: **28.06.2023**
(21) Application number: 21857501.7
(22) Date of filing: 03.08.2021
(51) Int. Cl.: H04Q 11/00, H04J 3/16

(54) **SERVICE SCHEDULING METHOD, PACKET OPTICAL TRANSPORT NETWORK DEVICE, AND STORAGE MEDIUM**

(30) Priority: 21.08.2020 CN 202010852112
(71) Applicant: ZTE Corporation, Shenzhen, Guangdong 518057 (CN)
(72) Inventor: RUAN, Zhiming, Shenzhen, Guangdong 518057 (CN)
(74) Representative: Petraz, Gilberto Luigi
(86) International application number: PCT/CN2021/110344
(87) International publication number: WO 2022/037406

(57) **Abstract**

The present disclosure provides a service scheduling method, a packet optical transport network device, and a storage medium. The method comprises: acquiring a service data packet, the service data packet being sent from a sending end line card in a packet optical transport network device by means of a first interface; determining a target interface among a plurality of second interfaces of different interface types connected to a receiving end line card; and sending the service data packet to the receiving end line card by means of the target interface.

## Description

### Cross-reference to Related Applications

This application claims the priority of Chinese patent application CN 202010852112.5, entitled "Service Scheduling Method, Packet Optical Transport Network Device, and Storage Medium" and filed on August 21, 2020, the entirety of which is incorporated herein by reference.

### Field of the Invention

The present disclosure relates to the technical field of communication, and in particular, to a service scheduling method, a packet optical transport network device, and a storage medium.

### Background of the Invention

At present, existing OTN (optical transport network) line cards on a centralized packet switching POTN (packet optical transport network) device are mainly connected to a cross board by means of an Interlaken interface, so as to realize scheduling of OTN services on the cross board.

Since one independent Interlaken interface needs to be occupied by a slot for each of the OTN line cards and a lot of resources of a packet switching chip in the cross board is occupied by the Interlaken interface, the number of Interlaken interfaces provided from the packet switching chip in the cross board cannot satisfy the need of the slot for the OTN line card in the existing POTN device, which results in requirement on the slot when the OTN line card is inserted into the POTN device and reduces the efficiency and convenience for the POTN device to implement service scheduling.

Therefore, how to enhance the efficiency and convenience of the service scheduling of the POTN device and to avoid the requirement on the slot when the OTN line card is inserted has become an urgent problem that needs to be solved.

### Summary of the Invention

The main object of the embodiments of the present disclosure is to provide a service scheduling method, a packet optical transport network device, and a storage medium. By adding a new interface type between a sending end line card and a cross board and between a receiving end line card and the cross board, the problem of requirement on the number of interfaces in a case where the line card is connected to the cross board is solved, and service data packets are transmitted by means of corresponding interfaces of different types, so that the efficiency and the convenience of the service scheduling is enhanced.

According to a first aspect, an embodiment of the present disclosure provides a service scheduling method applied in a cross board of a packet optical transport network device. The service scheduling method includes: acquiring a service data packet sent from a sending end line card in the packet optical transport network device by means of a first interface; determining a target interface among a plurality of second interfaces of different interface types connected to a receiving end line card; and sending the service data packet to the receiving end line card by means of the target interface.

According to a second aspect, an embodiment of the present disclosure provides a service scheduling method applied in a sending end line card of a packet optical transport network device. The service scheduling method includes: generating a service data packet including time slot information; acquiring a preset service cross configuration table, and judging whether a target interface address corresponding to the time slot information exists in the service cross configuration table, the target interface address being configured to determine a target interface among second interfaces; and sending the service data packet to a cross board by means of a first interface in a case where the target interface address corresponding to the time slot information exists in the service cross configuration table, such that the cross board sends the service data packet to a receiving end line card by means of the target interface.

According to a third aspect, an embodiment of the present disclosure further provides a packet optical transport network device including a cross board and a line card. The cross board includes a processor, a memory, a computer program stored on the memory and executable by the processor, and a data bus for communication connection between the processor and the memory; the computer program, when executed by the processor, implements the above service scheduling method; and the line card includes a processor, a memory, a computer program stored on the memory and executable by the processor, and a data bus for communication connection between the processor and the memory; the computer program, when executed by the processor, implements the above service scheduling method.

According to a fourth aspect, an embodiment of the present disclosure further provides a computer readable storage medium storing one or more programs, the one or more programs being executable by one or more processors, so as to implement the steps of any of service scheduling methods as provided in the description of the present disclosure.

### Brief Description of the Drawings

In order to describe technical solutions of the present disclosure more clearly, embodiments will be described in detail with reference to the accompanying drawings. Apparently, the drawings in the following description only illustrate some embodiments of this application, and a person of ordinary skills in the art may also acquire other drawings based on these drawings without making any creative effort.
Fig. 1 is a schematic diagram of a structure of a packet optical transport network device provided in an embodiment of the present disclosure;
Fig. 2 is a schematic diagram of a structure of an interface type adopted in a packet optical transport network device provided in the related art;
Fig. 3 is a schematic diagram of a structure of another packet optical transport network device provided in an embodiment of the present disclosure;
Fig. 4 is a schematic block diagram of a structure of a cross board provided in an embodiment of the present disclosure;
Fig. 5 is a schematic block diagram of a structure of a line card provided in an embodiment of the present disclosure;
Fig. 6 is a schematic flowchart of a service scheduling method provided in an embodiment of the present disclosure;
Fig. 7 is a schematic diagram of a structure of another cross board provided in an embodiment of the present disclosure;
Fig. 8 is a schematic diagram of a structure for acquiring service cross configuration information provided in an embodiment of the present disclosure;
Fig. 9 is a schematic diagram of a structure of a service data packet provided in an embodiment of the present disclosure;
Fig. 10 is a schematic flowchart of a sub-step of sending a service data packet to a line card of a receiving end provided in an embodiment of the present disclosure;
Fig. 11 is a schematic flowchart of a sub-step of service protection dual sending of a service data packet provided in an embodiment of the present disclosure;
Fig. 12 is a schematic block diagram of the service protection dual sending of a service data packet provided in an embodiment of the present disclosure;
Fig. 13 is a schematic flowchart of a sub-step of service protection selective reception of a service data packet provided in an embodiment of the present disclosure;
Fig. 14 is a schematic block diagram of service protection selective reception of a service data packet provided in an embodiment of the present disclosure;
Fig. 15 is a schematic flowchart of a sub-step of another service protection dual sending of a service data packet provided in an embodiment of the present disclosure;
Fig. 16 is a schematic block diagram of another service protection dual sending of the service data packet provided in an embodiment of the present disclosure;
Fig. 17 is a schematic flowchart of a sub-step of another service protection selective reception of a service data packet provided in an embodiment of the present disclosure;
Fig. 18 is a schematic block diagram of another service protection selective reception provided in an embodiment of the present disclosure; and
Fig. 19 is a schematic flowchart of another service scheduling method provided in an embodiment of the present disclosure.

### Detailed Description of the Embodiments

Technical solutions in embodiments of the present disclosure will be described below clearly and completely with reference to the accompanying drawings, and apparently, the embodiments described are only some, rather than all, of the embodiments. All other embodiments acquired by a person of ordinary skills in the art based on the embodiments of the present disclosure without making any creative effort fall into the protection scope of the present disclosure.

Flowcharts shown in the drawings are only for exemplary illustration, and it is not necessary for the flowcharts to include all contents and operations/steps or be implemented according to the sequence described. For example, some of the operations/steps may be further divided, combined or partially incorporated, and thus the actual implementation sequence may vary according to actual circumstances.

It should be understood that, terms used in the specification of the present disclosure are only for the purpose of describing a specific embodiment and are not intended to limit the present disclosure. As used in the specification and the appended claims of the present disclosure, unless otherwise specified expressly in the context, the singular form preceded by "a", "one", and "the" intends to include the plural form.

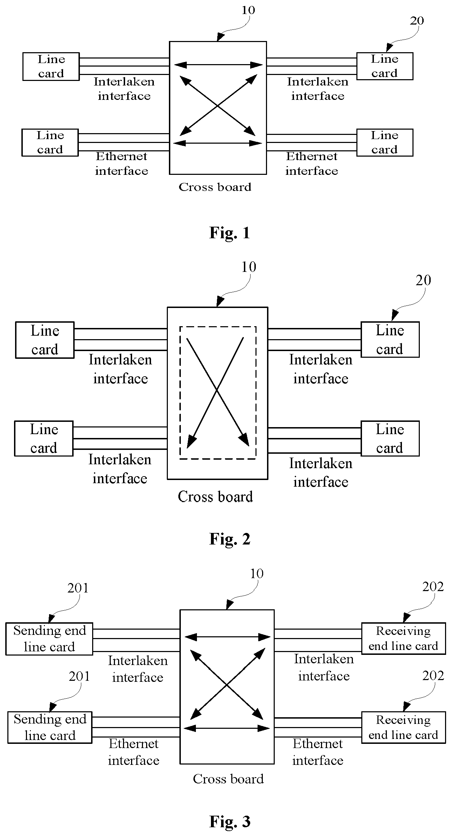

Referring to Fig. 1, Fig. 1 is a schematic diagram of a structure of a packet optical transport network (POTN) device provided in an embodiment of the present disclosure. The POTN device includes a cross board 10 and a line card 20. The line card 20 may be inserted into the cross board 10 by means of an interface to establish communication connection.

It should be noted that, the cross board 10 includes a packet switching chip. The cross board 10 have functions such as realizing service interworking between a plurality of directions, completing APS protection switching of multiplex section, monitoring alarming information from various directions, completing channel protection switching, supporting 1+1 backup work, and the like.

Exemplarily, an interface between the line card 20 and the cross board 10 may be of different interface types. In the embodiment of the present disclosure, the interface types may include a type of an Ethernet interface and a type of an Interlaken interface.

The Ethernet interface refers to an interface for network data connection; and the Interlaken interface realizes high speed data transmission between chips and supports multichannel transmission based on an Interlaken protocol.

It should be noted that, in the related arts, an interface, with an interface type adopted by the packet optical transport network device, between line cards 20 and the cross board 10 is an Interlaken interface, as shown in Fig. 2. However, in the embodiments of the present disclosure, an Ethernet interface may be added between the line cards 20 and the cross board 10, so that the number of interfaces between the line cards 20 and the cross board 10 is increased and the problem of requirement on the number of interfaces when the line cards 20 are connected to the cross board 10 is solved.

Exemplarily, a plurality of line cards 20 may be included, for example, a plurality of sending end line cards 201 and a plurality of receiving end line cards 202 are included, as shown in Fig. 3.

In some embodiments, the sending end line card 201 may be connected to the cross board 10 by means of a first interface, and the receiving end line card 202 may be connected to the cross board 10 by means of a second interface. The interface type of the first interface and the interface type of the second interface may include the Ethernet interface and the Interlaken interface. Exemplarily, the first interface includes at least one Ethernet interface and at least one Interlaken interface; and the second interface includes at least one Ethernet interface and at least one Interlaken interface.

In some embodiments, the cross board 10 may be connected to the sending end line card 201 and receives a service data packet sent from the sending end line card 201 by means of the first interface. Then, the cross board 10 may send the service data packet to the receiving end line card 202 by means of the second interface.

When the first interface is an Interlaken interface, an overhead byte needs to be added to the service data packet by the cross board 10, and the overhead byte is used to determine a target interface among second interfaces. When the first interface is the Ethernet interface, an overhead byte does not need to be added to the service data packet by the cross board 10, because the overhead byte has been added to the service data packet by the sending end line card 201 before the service data packet is received.

When the second interface is an Interlaken interface, a stripping processing needs to be performed on the service data packet by the cross board 10 to remove the overhead byte in the service data packet, and then the processed service data packet is sent to the receiving end line card 202 by means of the second interface. When the second interface is an Ethernet interface, the service data packet the cross board 10 sends to the receiving end line card 202 by means of the second interface, and at this time the service data packet carries the overhead byte.

It should be understood that, when the service data packet is transmitted by means of the first or the second interface with an interface type of an Ethernet interface, the overhead byte needs to be carried in the service data packet. Therefore, before the sending end line card 201 sends a service data packet by means of the Ethernet interface, an overhead byte needs to be added into the service data packet. When the cross board 10 sends a service data packet by means of the Ethernet interface, an overhead byte needs to be added into the service data packet if the overhead byte is not carried in the service data packet. Similarly, when the receiving end line card 202 sends a service data packet to the cross board 10 by means of the Ethernet interface, an overhead byte also needs to be added into the service data packet.

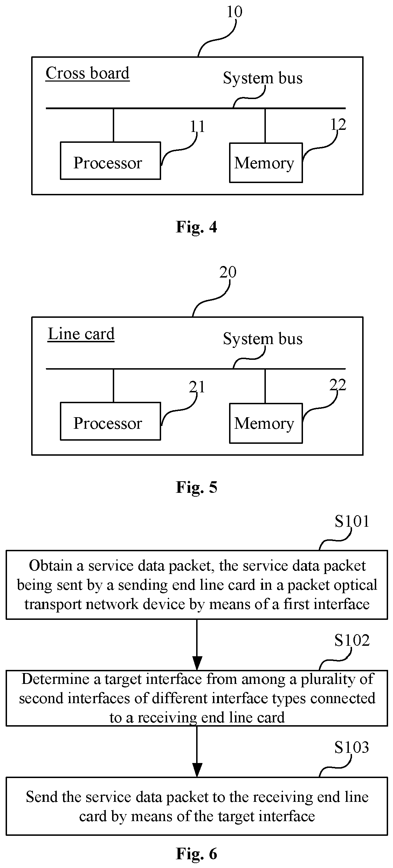

Referring to Fig. 4, the cross board 10 may include a processor 11 and a memory 12. The processor 11 may be connected to the memory 12 by means of a bus. The bus may be any suitable bus, such as an I2C (inter-integrated circuit) bus.

The memory 12 may include a non-volatile storage medium and an internal storage. The non-volatile storage medium may store an operating system and a computer program. The computer program includes a program instruction which, when executed, causes the processor to implement any one of service scheduling methods.

The processor 11 is configured to provide computing and controlling capabilities, so as to support the operation of the entire cross board 10.

In an embodiment, the processor 11 is configured to execute the computer program stored in the memory 12, and to implement the following steps when executing the computer program: acquiring a service data packet, the service data packet being sent from a sending end line card in a packet optical transport network device by means of a first interface; determining a target interface among a plurality of second interfaces of different interface types connected to a receiving end line card; and sending the service data packet to the receiving end line card by means of the target interface.

The processor 11 may be a central processing unit (CPU), and the processor may be alternatively other general-purpose processor, a digital signal processor (DSP), an application specific integrated circuit (ASIC), a field-programmable gate array (FPGA), or other programmable logic device, a discrete gate or a transistor logic component, a discrete hardware component, and the like. The general-purpose processor may be a microprocessor or any conventional processor, and the like.

Referring to Fig. 5, Fig. 5 is a schematic block diagram of a structure of a line card 20 provided in an embodiment of the present disclosure. The line card 20 may include a processor 21 and a memory 22 connected to each other by means of a bus. The memory 22 may include a non-volatile storage medium and an internal storage.

The internal storage provides an environment for executing a program in the non-volatile storage medium. The computer program, when executed by the processor 21, causes the processor 21 to implement any one of service scheduling methods. Exemplarily, the memory 22 stores a service cross configuration table.

The processor 21 is configured to provide computing and controlling capabilities, so as to support the operation of the entire line card 20.

In an embodiment, the processor 21 is configured to executing the computer program stored in the memory 21, and to implement the following steps when executing the computer program: generating a service data packet including time slot information; acquiring a preset service cross configuration table, and determining whether a target interface address corresponding to the time slot information exits in the service cross configuration table, the target interface address being configured to determine a target interface among second interfaces; and sending the service data packet to a cross board by means of a first interface when the target interface address corresponding to the time slot information exits in the service cross configuration table, so as to enable the cross board send the service data packet to a receiving end line card by means of the target interface.

It should be understood that, the processor 21 may be a central processing unit (CPU), and the processor may be alternatively other general-purpose processor, a digital signal processor (DSP), an application specific integrated circuit (ASIC), a field-programmable gate array (FPGA), or other programmable logic device, a discrete gate or a transistor logic component, a discrete hardware component, and the like. The general-purpose processor may be a microprocessor or any conventional processor, and the like.

Some embodiments of the method of the present disclosure are described in detail below with reference to the drawings. The following embodiments and features in the embodiments may be combined with each other without confliction.

Referring to Fig. 6, Fig. 6 is a schematic flowchart of a service scheduling method provided in an embodiment of the present disclosure. The service scheduling method is applied in a cross board. By adding a new interface type between a sending end line card and the cross board and between a receiving end line card and the cross board, the problem of requirement on the number of interfaces when the line card is connected to the cross board is solved, and the efficiency and convenience of service scheduling is improved. The service scheduling method includes the following step S101 to step S103.

At step S101, a service data packet is acquired, and the service data packet is sent from a sending end line card in a packet optical transport network device by means of a first interface.

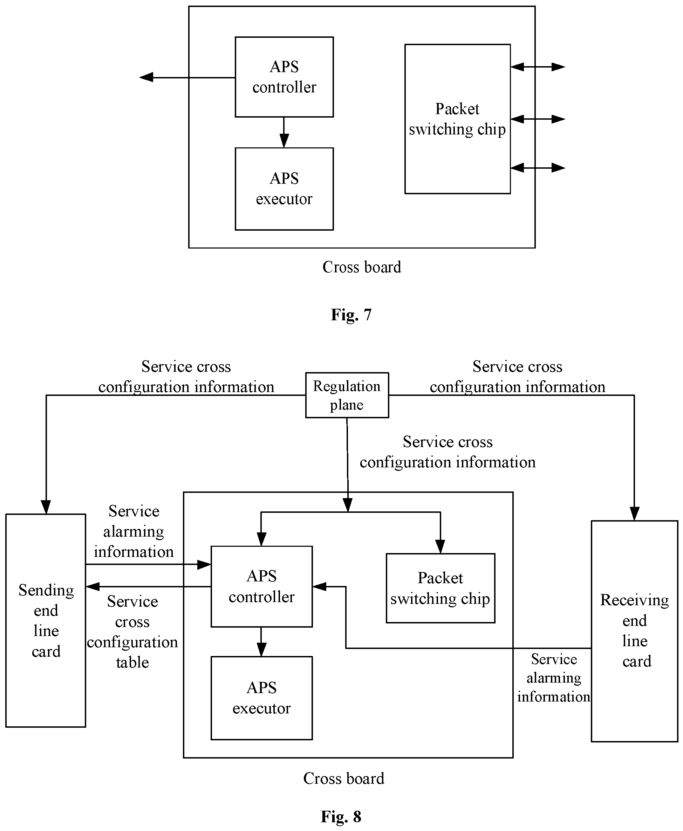

As shown in Fig. 7, Fig. 7 is a schematic diagram of a structure of a cross board. The cross board includes a packet switching chip, an APS (automatic protection switching) controller, and an APS executer. The packet switching chip is configured to process a received service data packet. The APS controller is configured to acquire service alarming information generated from a sending end line card and from a receiving end line card, and sends the service alarming information to the APS executer. The APS executer is configured to generate a decision result according to the service alarming information, and the decision result is configured for controlling of a path type of the receiving end line card and a path type of the receiving end line card.

Exemplarily, a first interface refers to an interface provided from the packet switching chip on the cross board, and may include two types of interfaces, i.e., an Ethernet interface and an Interlaken interface. After the sending end line card in the packet optical transport network device is inserted into the first interface of the cross board, communication connection between the cross board and the sending end line card may be established, so that the type of the first interface may be identified.

Service data packets are acquired by fragmenting a service data frame by the sending end line card. Time slot information is added by the sending end line card to the service data packets acquired by fragmenting the service data frame sequentially. After the time slot information is added, the service data packets are sequentially sent to the cross board by means of the first interface.

It should be noted that, a time slot refers to a minimum unit for transporting circuit switching aggregated information, and may be understood as a time slice. In the embodiments of the present disclosure, the time slot information may be further configured to determine a target interface of the service data packet among the second interfaces, in addition to marking the time of a service data packet so as to recombine a plurality of service data packets to obtain a service data frame.

Exemplarily, a target interface address corresponding to the service data packet may be determined according to the time slot information corresponding to the service data packet and through a preset service cross configuration table, so that the second interface corresponding to the target interface address of the service data packet is determined as the target interface. The service cross configuration table includes a correspondence relationship between the time slot information and the target interface address.

The service cross configuration table may be generated according to service cross configuration information issued by a regulation plane in the POTN device.

It should be noted that, in the embodiments of the present disclosure, the service cross configuration information may be set by the regulation plane according to the actual Ethernet interface and the actual Interlaken interface in the cross board; and the service cross configuration information is configured to realize service cross scheduling. Exemplarily, in a case where an Ethernet interface A and an Interlaken interface B are provided at a receiving side of the cross board and an Ethernet interface C and an Interlaken interface D are provided at a sending side of the cross board, the service cross configuration information includes: the Ethernet interface A vs the Ethernet interface C, the Ethernet interface A vs the Interlaken interface D, the Interlaken interface B vs the Ethernet interface C, and the Interlaken interface B vs the Interlaken interface D.

Exemplarily, the service cross configuration table may be as shown in the following Table 1.

**Table 1 Service Cross Configuration Table**

| Time slot | Target interface address |
|---|---|
| Time slot 1 | IP1 |
| Time slot 2 | IP2 |
| Time slot 3 | IP3 |
| Time slot 4 | IP4 |

Referring to Fig. 8, Fig. 8 is a schematic diagram of a structure for acquiring service cross configuration information. In Fig. 8, the service cross configuration information issued by the regulation plane is sent to the line card with the Ethernet interface, the packet switching chip on the cross board, the APS controller on the cross board, and the line card with the Interlaken interface, respectively. Service alarming information may be generated by the line card according to the service cross configuration information, and may be sent to the APS controller on the cross board. An overhead byte may be added by the cross board to a service data packet that does not carry the overhead byte and a check byte according to the service cross configuration information. A service cross configuration table may be generated by the APS controller on the cross board according to the cross configuration information, and may be sent by the APS controller on the cross board to the sending end line card with the interface type of the Ethernet interface, so that the sending end line card is enabled to determine the second interface corresponding to the service data packet according to the service cross configuration table and to add the overhead byte.

A new interface type is added between the sending end line card and the cross board, and between the receiving end line card and the cross board; the service data packet is sent by the sending end line card to the cross board by means of a first interface; and whether the service data packet carries the overhead byte may be determined according to the interface type of the first interface.

At step S102, a target interface is determined among a plurality of second interfaces of different interface types connected to the receiving end line card.

Exemplarily, the plurality of second interfaces include at least one Ethernet interface and at least one Interlaken interface, and the at least one Ethernet interface is the newly added interface. It should be noted that, by adding the interface type of the Ethernet interface, service cross scheduling can be performed among the receiving line card, the cross board and the sending end line card, which solves the problem of requirement on the number of interfaces when the line card is connected to the cross board.

In some embodiments, the determining the target interface among the plurality of the second interfaces of different interface types connected to the receiving end line card, includes: acquiring the overhead byte in the service data packet, the overhead byte including the target interface address; and determining the second interface corresponding to the target interface address as the target interface.

The overhead byte is added into the service data packet by the sending end line card; or the overhead byte is added into the service data packet by the cross board.

The target interface among the second interfaces may be determined according to the target interface address in the overhead byte acquired in the service data packet, so that the service data packet may be sent to the receiving end line card by means of the target interface.

In some embodiments, before the overhead byte in the service data packet is acquired, the method further includes: acquiring preset service cross configuration information in a case where the first interface is an Interlaken interface; and adding the overhead byte into the service data packet according to the service cross configuration information.

The preset service cross configuration information is acquired in a case where the first interface is an Interlaken interface, and the overhead byte may be added into the service data packet according to the service cross configuration information, so that the target interface of the service data packet may be determined subsequently according to the overhead byte in the service data packet.

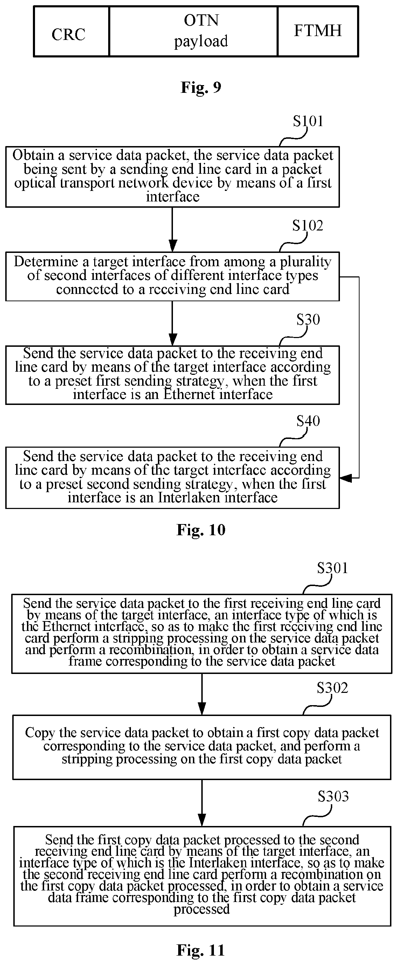

In the embodiments of the present disclosure, a check byte may be added to the service data packet while the overhead byte is added into the service data packet. The service data packet added with the overhead byte and the check byte is as shown in Fig. 9. Fig. 9 is a schematic diagram of a structure of a service data packet provided in an embodiment of the present disclosure.

Exemplarily, FTMH may represent the overhead byte, and CRC may represent the check byte. An FTMH byte is added into a header of the service data packet. A CRC byte is added into a tail of the service data packet. Data contents in the service data packet may be represented as OTN payload, and a CRC byte is configured for performing a check on the OTN payload. Exemplarily, the overhead byte includes a plurality of parameters corresponding to the service data packet, as shown in the following Table 2.

**Table 2 Parameters of the Overhead Byte**

| Field | Size | Bits | Definition |
|---|---|---|---|
| Packet | 8 | 32:24 | OTN Packet Size (65-255) |

| Type | 1 | 23 | Unicast: 0,Multicast: 1 |
|---|---|---|---|
| Reserved | 4 | 22:19 | Reserved |
| Destination | 19 | 18:0 | Destport or multicast id |

In Table 2, a Destination field may be represent the target interface address, and the target interface address may be determined according to a value of the Destination field. In addition to the target interface address, the overhead byte may also include parameters, such as a size of a data packet, a type of the data packet, a reserved field, and the like.

In the embodiments of the present disclosure, whether the overhead byte and the check byte needs to be added into the service data packet may be determined according to the interface type of the first interface, and the sending end line card sends the service data packet by means of the first interface. In a case where the first interface is an Ethernet interface, the acquired service data packet carries the overhead byte and the check byte. In a case where the first interface is an Interlaken interface, the acquired service data packet does not carry the overhead byte and the check byte. Therefore, the overhead byte and the check byte needs to be added by the cross board into the service data packet without carrying the overhead byte and the check byte, so as to determine the interface type of the second interface corresponding to the service data packet according to the overhead byte, thereby determining the target interface.

It should be understood that, since the service cross configuration table includes the corresponding relationship between the time slot information and the target interface address, the target interface address corresponding to the service data packet may be determined according to the time slot information corresponding to the service data packet and through the service cross configuration table, and the target interface address, as part of the overhead byte, is added into the service data packet.

Exemplarily, in a case where the target interface address corresponding to the service data packet is determined according to the time slot information corresponding to the service data packet based on the service cross configuration table, the target interface address, as a Destination parameter, is added into the overhead byte, so that the target interface of the service data packet may be determined subsequently among second interfaces according to the overhead byte.

Exemplarily, the overhead byte in the service data packet may be acquired, and the target interface corresponding to the service data packet may be determined according to the target interface address in the overhead byte. Exemplarily, in a case where the interface type corresponding to the target interface address is the Ethernet interface, the service data packet is sent to the receiving end line card by means of the Ethernet interface. Exemplarily, in a case where the interface type corresponding to the target interface address is the Interlaken interface, the service data packet is sent to the receiving end line card by means of the Interlaken interface.

At step S103, the service data packet is sent to the receiving end line card by means of the target interface.

After the overhead byte in the service data packet is acquired and the target interface is determined among the second interfaces, the service data packet may be sent to the receiving end line card by means of the target interface.

In some embodiments, the sending the service data packet to the receiving end line card by means of the target interface may include sending the service data packet to the receiving end line card by means of the target interface in a case where the target interface is the Ethernet interface.

In other embodiments, the sending the service data packet to the receiving end line card by means of the target interface may include performing a stripping processing on the service data packet and sending the processed service data packet to the receiving end line card by means of the target interface in a case where the target interface is the Interlaken interface.

The stripping processing includes stripping the overhead byte in the service data packet. In the embodiments of the present disclosure, the stripping processing is further configured for stripping the check byte in the service data packet.

It should be noted that, in a case where the target interface is the Interlaken interface, the overhead byte and the check byte do not need to be carried in the service data packet to be sent. Thus, before the service data packet is to be sent, the stripping processing needs to be performed on the overhead byte and the check byte in the service data packet, and the processed service data packet includes the OTN payload.

The service data packet or the service data packet after the stripping processing is sent to the receiving end line card by means of the target interface with a corresponding interface type. Since different interface types are newly added, the problem of requirement on the number of interfaces when the line card is connected to the cross board is solved; and various service data packets are transmitted by means of corresponding interfaces of different types, thereby enhancing the efficiency and convenience of service scheduling.

In the embodiments of the present disclosure, in addition to the service cross scheduling, the service scheduling method may further realize service protection switching. The service protection switching includes two scenarios, i.e., service protection dual sending and service protection selective reception. A specific process of the service protection switching will be described below by taking the Ethernet interface as the first interface and the Interlaken interface as the first interface.

It should be noted that, protection switching refers to a process in which switching from a working path channel to a protection path channel occurs or switching from a primary device to a backup device occurs. The service protection dual sending refers to sending the service data packet to two receiving end line cards at the same time, so as to ensure that at least one service data packet reaches the receiving end line card. The service protection selective reception refers to receiving service data packets sent from two receiving end line cards at the same time, and determining, according to the path type of the receiving end line card, for example, a working path or a protection path, to forward the service data packet corresponding to the working path to the sending end line card and discard the service data packet corresponding to the protection path.

Referring to Fig. 10, the sending the service data packet to the receiving end line card by means of the target interface in step S103 may specifically further include the following step S30 or step S40.

At step S30, in a case where the first interface is an Ethernet interface, the service data packet is sent to the receiving end line card by means of the target interface according to a preset first sending strategy.

The preset first sending strategy is configured to determine a manner for sending the service data packet.

Exemplarily, the receiving end line card includes a first receiving end line card and a second receiving end line card. That is, the service data packet is sent to two receiving end line cards, so as to realize the service protection dual sending. An interface type of the second interface corresponding to the first receiving end line card is different from an interface type of the second interface corresponding to the second receiving end line card. In order to facilitate description, the first receiving end line card may be set to correspond to the Ethernet interface, and the second receiving end line card may be set to correspond to the Interlaken interface.

Referring to Fig. 11, Fig. 11 is a schematic flowchart of sending a service data packet to a receiving end line card by means of a target interface according to a preset first sending strategy in the step S30, which may specifically include the following step S301 to step S303.

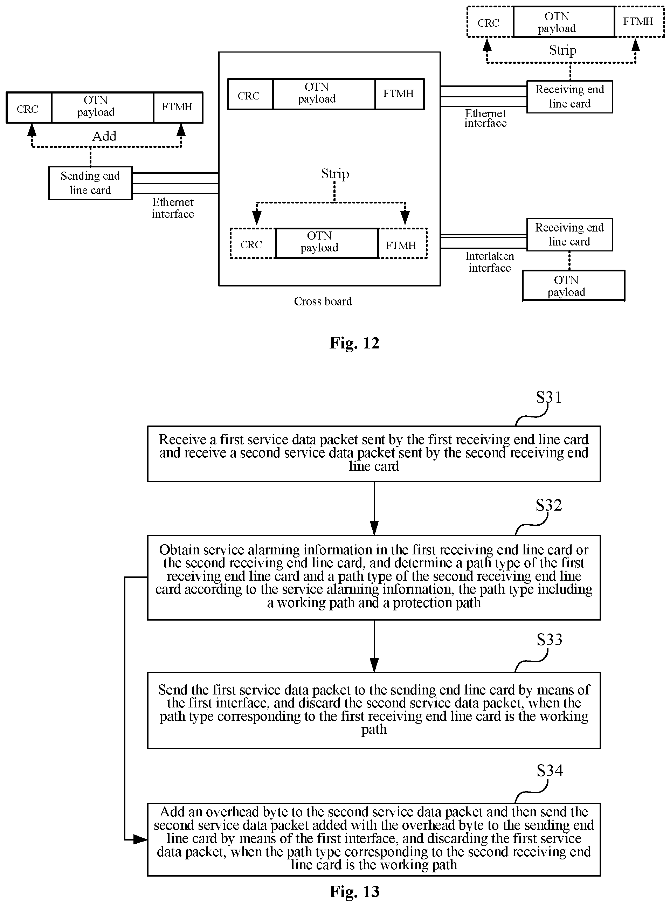

Referring to Fig. 11, Fig. 12 is a schematic block diagram of service protection dual sending of a service data packet provided in the embodiment of the present disclosure.

At step S301, the service data packet is sent to the first receiving end line card by means of the target interface with the interface type of the Ethernet interface, so that the first receiving end line card is enabled to perform a stripping processing and a recombination on the service data packet, thereby acquiring a service data frame corresponding to the service data packet.

It should be noted that, after the service data packet sent from the sending end line card by means of the first interface is received, in a case where the overhead byte and the check byte is not carried in the received service data packet, the overhead byte and the check byte are added into the service data packet. Therefore, when the service data packet is sent to the first receiving end line card, the overhead byte and the check byte at this time is carried in the service data packet.

Exemplarily, after receiving the service data packet, the first receiving end line card performs the stripping processing and the recombination on the service data packet. It should be noted that, the recombination refers to performing splicing on a plurality of service data packets according to time slot information, so as to obtain the service data frame.

Exemplarily, the service data packet after the stripping processing includes an OTN pay load. A time slot, in service data frame, of the processed service data packet is determined according to the time slot information of the processed service data packet, so that the processed service data packet may be sent into a corresponding time slot.

In some embodiments, before the stripping processing is performed on the service data packet, the method further includes: judging whether the time slot information in the service data packet is legal or not; performing the stripping processing on the service data packet in a case where the time slot information in the service data packet is determined to be legal; and discarding the service data packet in a case where the time slot information in the service data packet is determined to be illegal.

Exemplarily, a query whether time slot information corresponding to the service data packet exists in the service cross configuration table may be performed to judge whether the time slot information in the service data packet is legal or not. In a case where the time slot information corresponding to the service data packet exists in the service cross configuration table, it indicates that the time slot information corresponding to the service data packet is legal; and in a case where no time slot information corresponding to the service data packet exists in the service cross configuration table, it indicates that the time slot information corresponding to the service data packet is illegal.

By judging whether the time slot information in the service data packet is legal or not, the security of the service scheduling can be ensured effectively.

At step S302, the service data packet is copied to obtain a first copy data packet corresponding to the service data packet, and a stripping processing is performed on the first copy data packet.

It should be understood that, the overhead byte and the check byte are carried in the service data packet before the service data packet is copied. Therefore, the overhead byte and the check byte are carried in the first copy data packet, acquired by copying the service data packet, corresponding to the service data packet.

Exemplarily, since the first copy data packet is sent to the second receiving end line card by means of the target interface with the interface type of the Interlaken interface, the stripping processing needs to be performed on the first copy data packet before the first copy data packet is to be sent, so as to strip the overhead byte and the check byte from the first copy data packet. The first copy data packet after the stripping processing includes an OTN payload.

At step S303, the processed first copy data packet is sent to the second receiving end line card by means of the target interface with the interface type of the Interlaken interface, so that a recombination is performed on the processed first copy data packet by the second receiving end line card, and a service data frame corresponding to the processed first copy data packet is obtained.

Exemplarily, after receiving the processed first copy data packet, the second receiving end line card performs the recombination on the processed first copy data packet. It should be noted that, the recombination refers to performing splicing on a plurality of first copy data packets according to the time slot information, so as to obtain the service data frame.

Exemplarily, a time slot, in the service data frame, of the processed first copy data packet may be determined according to the time slot information in the processed first copy data packet, so that the processed first copy data packet may be sent into the corresponding time slot.

By sending the service data packet to the first receiving end line card by means of the target interface with the interface type of the Ethernet interface and by sending the processed first copy data packet to the second receiving end line card by means of the target interface with the interface type of the Interlaken interface, the service data packet may be sent to receiving end line cards of different interface types at the same time, thereby realizing the protection dual sending of the service data packet and enhancing the security and reliability of the service scheduling.

Referring to Fig. 13, after sending the service data packet to the receiving end line card by means of the target interface according to the preset first sending strategy in the step S30, the method may further include: receiving the service data packet returned from the receiving end line card and performing selective reception on the service data packet. The selective reception may specifically include the following steps S31 to S35.

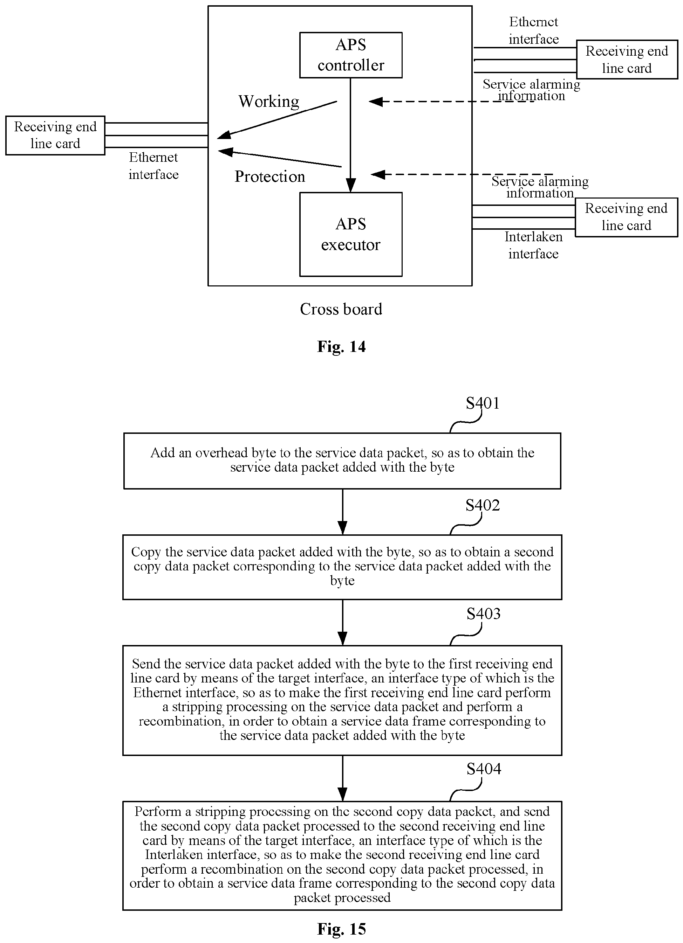

Referring to Fig. 14, Fig. 14 is a schematic block diagram of service protection selective reception of the service data packet provided in the embodiment of the present disclosure.

At step S31, a first service data packet sent from the first receiving end line card is received, and a second service data packet sent from the second receiving end line card is received.

It should be understood that, since the cross board sends the service data packet or the first copy data packet corresponding to the service data packet to the first receiving end line card and the second receiving end line card at the same time, the first receiving end line card and the second receiving end line card also send a service data packet to the cross board at the same time, respectively. In this case, whether the first receiving end line card or the second receiving end line card is the working path needs to be judged according to the service alarming information, so as to select one service data packets from the first receiving end line card or from the second receiving end line.

At step S32, the service alarming information from the first receiving end line card or from the second receiving end line card is acquired, and the path type of the first receiving end line card and the path type of the second receiving end line card are determined according to the service alarming information. The path type includes the types of a working path and of a protection path.

Exemplarily, the service alarming information may be generated by the first receiving end line card and by the second receiving end line card according to the service cross configuration information.

It should be noted that, the service alarming information is configured to indicate the path type for transmission of the service data packet. In the service protection switching, the path type includes the working path and the protection path. In a case where the service alarming information is represented as 1, it indicates that the path type for transmission of the service data packet is the protection path; and in a case where the service alarming information is represented as 0, it indicates that the path type for transmission of the service data packet is the working path.

Exemplarily, the service alarming information may be determined according to the service cross configuration information, and the service alarming information generated by the first receiving end line card is different from the service alarming information generated by the second receiving end line card. For example, when the service alarming information generated by the first receiving end line card is represented as 0, the service alarming information generated by the second receiving end line card is represented as 1.

Exemplarily, when the service alarming information generated by the first receiving end line card is represented as 0, it may be determined that the path type corresponding to the first receiving end line card is the type of the working path and that the path type corresponding to the second receiving end line card is the type of the protection path. When the service alarming information generated by the first receiving end line card is represented as 1, it may be determined that the path type corresponding to the first receiving end line card is the type of the protection path and that the path type corresponding to the second receiving end line card is the type of the working path.

At step S33, in a case where the path type corresponding to the first receiving end line card is the type of the working path, the first service data packet is sent to the sending end line card by means of the first interface, and the second service data packet is discarded.

It should be noted that, since the first receiving end line card sends the first service data packet by means of the Ethernet interface and the first service data packet carries the overhead byte and the check byte, the first service data packet may be sent to the sending end line card by means of the first interface in a case where the path type corresponding to the first receiving end line card is the type of the working path. The first interface is the Ethernet interface, and thus before the first service data packet is sent to the sending end line card by means of the first interface, it is not necessary to perform a stripping processing on the first service data packet.

Exemplarily, since the path type corresponding to the second receiving end line card is the type of the protection path, the second service data packet may be discarded after the first service data packet is sent to the sending end line card by means of the first interface.

By discarding the second service data packet, redundancy of the service data packet may be avoided while ensuring the security of the service data packet.

At step S34, in a case where the path type corresponding to the second receiving end line card is the type of the working path, the second service data packet is sent to the sending end line card by means of the first interface after the overhead byte is added into the second service data packet, and the first service data packet is discarded.

It should be noted that, the second receiving end line card sends the second service data packet by means of the Interlaken interface, the second service data packet does not carry the overhead byte and the check byte, and the first interface is the Ethernet interface. Therefore, in a case where the path type corresponding to the second receiving end line card is the type of the working path, the overhead byte and the check byte needs to be added into the second service data packet. Then, the second service data packet added with the overhead byte and the check byte is sent to the sending end line card by means of the first interface.

The path type of the first receiving end line card and the path type of the second receiving end line card may be determined according to the service alarming information acquired in the first receiving end line card or in the second receiving end line card, so that whether the first service data packet or the second service data packet is sent to the sending end line card is judged according to the path type, thereby realizing protection selective reception of the service data packet and enhancing the security and reliability of the service scheduling.

At step S35, in a case where the first interface is the Interlaken interface, the service data packet is sent to the receiving end line card by means of the target interface according to the preset second sending strategy.

In the embodiments of the present disclosure, the interface type of the second interface corresponding to the first receiving end line card is different from the interface type of the second interface corresponding to the second receiving end line card. In order to facilitate description, the first receiving end line card may be set to correspond to the Ethernet interface, and the second receiving end line card may be set to correspond to the Interlaken interface.

Referring to Fig. 15, Fig. 15 is a schematic flowchart of sending a service data packet to a receiving end line card by means of a target interface according to a preset second sending strategy in the step S40, which specifically includes the following step S401 to step S404.

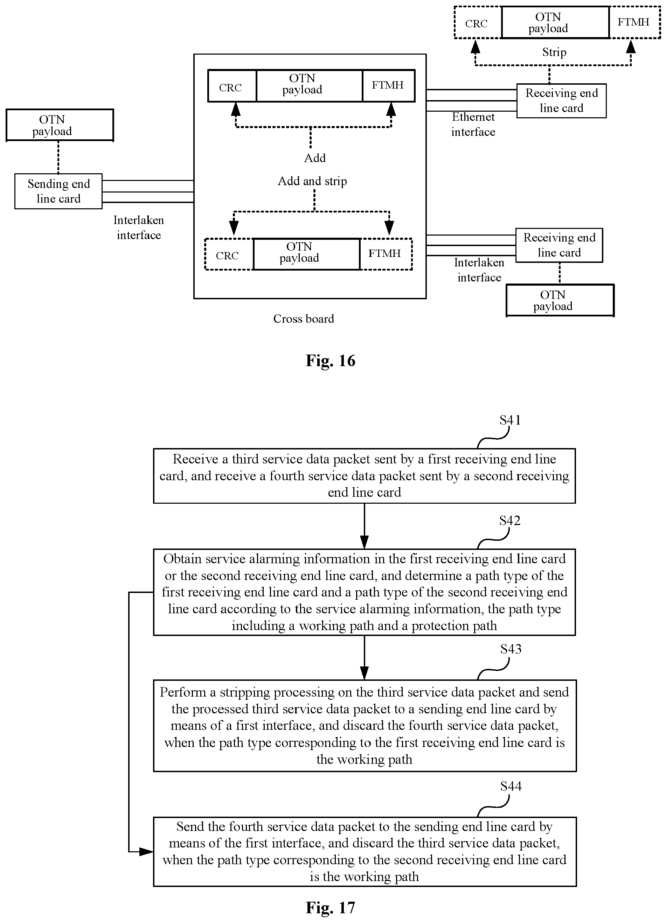

Referring to Fig. 16, Fig. 16 is a schematic diagram of another service protection dual sending of a service data packet provided in the embodiment of the present disclosure.

At step S401, an overhead byte is added into a service data packet, so as to obtain a service data packet added with the byte.

Exemplarily, since the first interface is the Interlaken interface, the service data packet received by the cross board by means of the first interface does not carry the overhead byte and the check byte, and the overhead byte and the check byte needs to be added into the service data packet.

At step S402, the service data packet added with the byte is copied, so as to obtain a second copy data packet corresponding to the service data packet added with the byte.

Exemplarily, both the second copy data packet and the service data packet added with carry the overhead byte and the check byte.

At step S403, the service data packet added with the byte is sent to the first receiving end line card by means of the target interface with the interface type of the Ethernet interface, so that a stripping processing and a recombination are performed on the service data packet added with the byte by the first receiving end line card, and a service data frame corresponding to the service data packet added with the byte is obtained.

Exemplarily, after the first receiving end line card has received the service data packet added with the byte, the stripping processing and the recombination are performed on the service data packet added with the byte by the first receiving end line card. The stripping processing and the recombination may refer to the detailed description in the above embodiments, and the specific process thereof is not repeated herein.

In some embodiments, before the stripping processing is performed on the service data packet added with the byte, the method may further include: judging whether the time slot information in the service data packet added with the byte is legal; performing the stripping processing on the service data packet added with the byte in a case where the time slot information in the service data packet added with the byte is judged to be legal; and discarding the service data packet added with the byte in a case where the time slot information in the service data packet added with the byte is judged to be illegal.

The specific process of the judging may refer to the detailed description in the above embodiments, and the specific process thereof is not repeated herein.

At step S404, a stripping processing is performed on the second copy data packet, and the processed second copy data packet is sent to the second receiving end line card by means of the target interface with the interface type of the Interlaken interface, so that a recombination is performed on the processed second copy data packet by the second receiving end line card, and a service data frame corresponding to the processed second copy data packet is obtained.

It should be understood that, the second copy data packet carries the overhead byte and the check byte, and the second copy data packet is sent to the second receiving end line card by means of the target interface with the interface type of the Interlaken interface. Thus, before the second copy data packet is to be sent, the stripping processing needs to be performed on the second copy data packet, so as to strip the overhead byte and the check byte from the second copy data packet. The second copy data packet after the stripping processing includes an OTN payload.

Exemplarily, after the second receiving end line card has received the second copy data packet after the stripping processing, the recombination is performed on the second copy data packet by the second receiving end line card. It should be noted that, the recombination refers to performing splicing on a plurality of second copy data packets according to the time slot information, so as to obtain the service data frame.

Exemplarily, the time slot corresponding to the processed second copy data packet in the service data frame may be determined according to the time slot information in the processed second copy data packet, so as to send the processed second copy data packet into the corresponding time slot.

By sending the service data packet added with the byte to the first receiving end line card by means of the target interface with the interface type of the Ethernet interface, and by sending the processed second copy data packet to the second receiving end line card by means of the target interface with the interface type of the Interlaken interface, the service data packet may be sent to receiving end line cards of different interface types at the same time, thereby realizing protection dual sending of the service data packet and enhancing the security and reliability of the service scheduling.

Referring to Fig. 17, after the service data packet is sent to the receiving end line card by means of the target interface according to the preset second sending strategy in the step S40, the method may further include receiving the service data packet returned from the receiving end line card, and a selective reception is performed on the service data packet, which specifically includes the following step S41 to step S44.

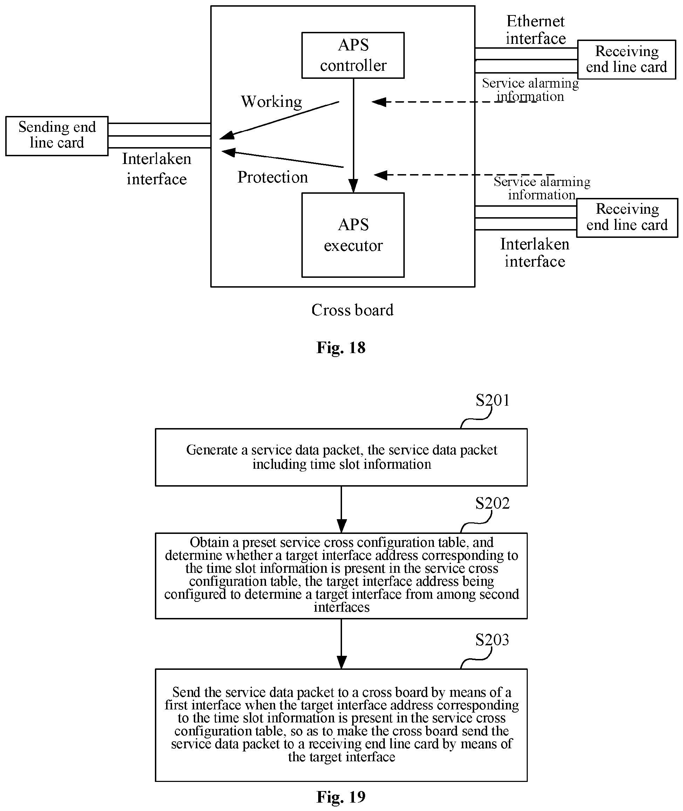

Referring to Fig. 18, Fig. 18 is a schematic diagram of another service protection selective reception of the service data packet provided in the embodiment of the present disclosure.

At step S41, a third service data packet sent from the first receiving end line card is received, and a fourth service data packet sent from the second receiving end line card is received.

At step S42, the service alarming information in the first receiving end line card or in the second receiving end line card is acquired, and the path type of the first receiving end line card and the path type of the second receiving end line card are determined according to the service alarming information. The path type includes a working path and a protection path.

Exemplarily, the first receiving end line card and the second receiving end line card may generate the service alarming information according to the service cross configuration information.

It should be noted that, the service alarming information is configured to indicate the path type for transmission of the service data packet. In the service protection switching, the path type includes the working path and the protection path. In a case where the service alarming information is represented as 1, it indicates that the path type for the transmission of the service data packet is the type of the protection path; and in a case where the service alarming information is represented as 0, it indicates that the path type for transmission of the service data packet is the type of the working path.

Exemplarily, the service alarming information is generated by the first receiving end line card and/or by the second receiving end line card, and the service alarming information generated by the first receiving end line card is different from the service alarming information generated by the second receiving end line card. For example, when the service alarming information generated by the first receiving end line card is represented as 0, the service alarming information generated by the second receiving end line card is represented as 1.

Exemplarily, when the service alarming information generated by the first receiving end line card is represented as 0, the path type corresponding to the first receiving end line card is determined to be the working path and the path type corresponding to the second receiving end line card is determined to be the protection path. When the service alarming information generated by the first receiving end line card is represented as 1, the path type corresponding to the first receiving end line card is determined to be the protection path and the path type corresponding to the second receiving end line card is determined to be the working path.

At step S43, In a case where the path type corresponding to the first receiving end line card is the working path, a stripping processing is performed on the third service data packet, the processed third service data packet is sent to the sending end line card by means of the first interface, and the fourth service data packet is discarded.

It should be noted that, the first receiving end line card sends the third service data packet by means of the Ethernet interface, the third service data packet carries the overhead byte and the check byte, and the first interface is the Interlaken interface. Therefore, In a case where the path type corresponding to the first receiving end line card is the type of the working path, the stripping processing needs to be performed on the third service data packet, so as to strip the overhead byte and the check byte from the third service data packet.

Exemplarily, since the path type corresponding to the second receiving end line card is the type of the protection path, the fourth service data packet may be discarded after the processed third service data packet is sent to the sending end line card by means of the first interface.

At step S44, when the path type corresponding to the second receiving end line card is the type of the working path, the fourth service data packet is sent to the sending end line card by means of the first interface, and the third service data packet is discarded.

It should be noted that, the second receiving end line card sends the fourth service data packet by means of the Interlaken interface, the fourth service data packet does not carry the overhead byte and the check byte, and the first interface is the Interlaken interface. Therefore, before the fourth service data packet is sent to the sending end line card by means of the first interface, the stripping processing does not need to be performed on the fourth service data packet. After the fourth service data packet is sent to the sending end line card by means of the first interface, the third service data packet may be discarded.

By acquiring the service alarming information in the first receiving end line card or in the second receiving end line card, the path type of the first receiving end line card and the path type of the second receiving end line card may be determined according to the service alarming information, so that whether to send the third service data packet or the fourth service data packet to the sending end line card may be determined according to the path type, which realizes the protection selective reception of the service data packet and enhances the security and reliability of the service scheduling.

Referring to Fig. 19, Fig. 19 is a schematic flowchart of another service scheduling method provided in an embodiment of the present disclosure. The service scheduling method is applied in the sending end line card. By adding the interface type between the sending end line card and the cross board, and between the receiving end line card and the cross board, the problem of requirement on the number of interfaces when the line card is connected to the cross board is solved. Service data packets are transmitted by means of corresponding interfaces of different types, thereby enhancing the efficiency and convenience of the service scheduling.

Exemplarily, the service scheduling method may also be applied in the receiving end line card. It should be understood that, when the receiving end line card sends the service data packet to the cross board, the receiving end line card may serve as the sending end line card.

The service scheduling method includes the following step S201 to step S203.

At step S201, the service data packet is generated, and the service data packet includes the time slot information.

Exemplarily, when the service data frame is fragmented to generate service data packets by the sending end line card, the time slot information may be added into the service data packets. Different service data packets correspond to different time slot information. A recombination may be performed on the service data packets according to the time slot information so as to acquire the service data frame, and the target interface of the service data packets among the second interfaces may also be determined according to the time slot information.

Exemplarily, the generated service data packet includes an OTN payload.

At step S202, the preset service cross configuration table is acquired, and whether the target interface address corresponding to the time slot information exists in the service cross configuration table or not is judged. The target interface address is configured to determine the target interface among the second interfaces.

The preset service cross configuration table may be generated by the cross board according to cross configuration information. After the service cross configuration table is generated by the cross board, the cross board sends the service cross configuration table to the receiving end line card or the sending end line card. Therefore, the sending end line card may store the service cross configuration table in a local database.

Exemplarily, the service cross configuration table includes the corresponding relationship between the time slot information and the target interface address, and thus whether the corresponding target interface address for the time slot information corresponding to the service data packet exists or not may be determined according to the service cross configuration table.

In some embodiments, when no target interface address corresponding to the time slot information exists in the service cross configuration table, the service data packet is discarded.

It should be noted that, when no target interface address corresponding to the time slot information in the service data packet exists in the service cross configuration table, it indicates that the service data packet is illegal or erroneous, and thus the service data packet needs to be discarded. When the target interface address corresponding to the time slot information in the service data packet exists in the service cross configuration table, it indicates that the service data packet is legal.

By acquiring the preset service cross configuration table, whether the target interface address corresponding to the time slot information exists in the service cross configuration table or not may be determined, so that whether the target interface for the service data packet exists in the second interfaces may be determined quickly, which can realize verification of the service data packet and effective enhancement of the security and the reliability of the service scheduling.

At step S203, when the target interface address corresponding to the time slot information exists in the service cross configuration table, the service data packet is sent to the cross board by means of the first interface, so that the cross board is enabled to send the service data packet to the receiving end line card by means of the target interface.

By add a new interface type between the sending end line card and the cross board and between the receiving end line card and the cross board, the sending end line card sends the service data packet to the cross board by means of the first interface, so that the cross board is enabled to send the service data packet to the receiving end line card by means of the target interface, thereby effectively enhancing the convenience of the service scheduling.

In some embodiments, the step of sending the service data packet to the cross board by means of the first interface includes: adding the overhead byte into the service data packet when the first interface is the Ethernet interface, and sending the service data packet added with the byte to the cross board.

Exemplarily, the overhead byte and the check byte are added into the service data packet. The overhead byte includes the target interface address.

In other embodiments, the step of sending the service data packet to the cross board by means of the first interface may include: sending the service data packet to the cross board by means of the first interface when the first interface is the Interlaken interface.

It should be noted that, since the first interface is the Interlaken interface and the OTN payload is transmitted by means of the Interlaken interface, the overhead byte and the check byte do not need to be added into the service data packet.

The overhead byte is added into the service data packet when the first interface is the Ethernet interface, and the service data packet added with the byte is sent to the cross board by means of the first interface, so that a case where the service data packet may not be transmitted by means of the Ethernet interface can be avoided, and the efficiency of the service scheduling can be enhanced.

In some embodiments, after the service data packet is sent to the cross board by means of the first interface, a fifth service data packet returned from the cross board may be received by means of the first interface. The fifth service data packet is sent from the receiving end line card to the cross board.

In some embodiments, in a case where the first interface is the Ethernet interface, a time slot check is performed on the fifth service data packet according to the preset service cross configuration table. If the time slot check is satisfied, the stripping processing and the recombination is performed on the fifth service data packet, so as to acquire the service data frame corresponding to the fifth service data packet.

It should be understood that, the purpose of performing the time slot check on the fifth service data packet is to determine whether the fifth service data packet is an illegal or erroneous service data packet. By performing the time slot check on the fifth service data packet, it may be avoided to receive the illegal or erroneous service data packet, and the security and reliability of the service scheduling is effectively enhanced.

Exemplarily, when the target interface address corresponding to the time slot information in the fifth service data packet exists in the service cross configuration table, the fifth service data packet may be determined to satisfy the time slot check. When no target interface address corresponding to the time slot information in the fifth service data packet exists in the service cross configuration table, the fifth service data packet may be determined to be illegal or erroneous, and thus the fifth service data packet needs to be discarded.

Exemplarily, since the fifth service data packet is received by means of the Ethernet interface, it indicates that the fifth service data packet carries the overhead byte and the check byte, and the stripping processing needs to be performed on the fifth service data packet, so as to acquire the processed fifth service data packet. Then, the recombination is performed on the fifth service data packet after the stripping processing, so as to acquire the service data frame corresponding to the fifth service data packet.

In some embodiments, when the first interface is the Interlaken interface, the recombination is performed on the fifth service data packet, so as to acquire the service data frame corresponding to the fifth service data packet.

It should be understood that, since the fifth service data packet is received by means of the Interlaken interface, it indicates that the fifth service data packet does not carry the overhead byte and the check byte, and the stripping processing does not need to be performed on the fifth service data packet. The recombination may be performed on the fifth service data packet directly, so as to acquire the service data frame corresponding to the fifth service data packet.

An embodiment of the present disclosure further provides a readable storage medium storing a program. The program includes program instructions, when executed by a processor, to implement any of service scheduling methods provided in the embodiments of the present disclosure.

For example, the program is loaded to the processor to perform the following steps: acquiring a service data packet, the service data packet being sent by a sending end line card in a packet optical transport network device by means of a first interface; determining a target interface among a plurality of second interfaces of different interface types connected to a receiving end line card; and sending the service data packet to the receiving end line card by means of the target interface.

For another example, the program is loaded to the processor to perform the following steps: generating a service data packet including time slot information; acquiring a preset service cross configuration table, and judging whether a target interface address corresponding to the time slot information exists in the service cross configuration table, the target interface address being configured to determine the target interface among second interfaces; and sending the service data packet to a cross board by means of a first interface when the target interface address corresponding to the time slot information exists in the service cross configuration table, so that the cross board is enable to send the service data packet to a receiving end line card by means of the target interface.

The storage medium may be an internal storage unit of the cross board or of the line card in the above embodiments, for example, a hard disk or an internal storage of the cross board or of the line card. The storage medium may alternatively be an external storage device of the cross board or of the line card, for example, a pluggable hard disk, a smart media card (SMC), a secure digital card (SD card), a flash card, and the like equipped on the cross board or on the line card.

As a person of ordinary skill in the art can understand, all or some steps of the method disclosed above and functional modules/units of a system or a device may be implemented as a software, a firmware, a hardware, and a proper combination thereof. In an embodiment of the hardware, a division of the functional modules/units mentioned in the above description does not necessarily correspond to a division of physical components. For example, one physical component may have a plurality of functions, or one function or step may be implemented by a plurality of physical components cooperatively. Some physical components or all physical components may be implemented as software executed by a processor, such as a digital signal processor or a microprocessor, or may be implemented as hardware, or may be implemented as an integrated circuit, such as an application-specific integrated circuit. Such software may be distributed on a computer readable medium, and the computer readable medium may include a computer storage medium (or non-transient medium) and a communication medium (or transient medium). As is known to a person of ordinary skills in the art, the term "computer storage medium" includes volatile and non-volatile, removable and non-removable mediums that may be implemented in any method or technology for storing information (such as a computer readable instruction, a data structure, and a program module or other data). The computer storage medium includes, but is not limited to, an RAM, an ROM, an EEPROM, a flash memory or other memory technology, a CD-ROM, a digital video disk (DVD) or other optical disk storage, a magnetic cassette, a magnetic tape, a magnetic disk storage or other magnetic storage device, or any other medium which can be used to store the desired information and can be accessed by a computer. Besides, it is known to a person of ordinary skills in the art that, the communication medium generally includes a computer readable instruction, a data structure, a program module, or other data in a modulated data signal such as a carrier wave or other transport mechanism and may include any information delivery medium.

It should be understood that the term "and/or" used in the description and the appended claims refers to any combination of one or more of associated listed items and all possible combinations and includes these combinations. It should be noted that, in the text, the terms "include" and "comprises", or any other variations, are intended to cover a non-exclusive inclusion, such that a process, method, article, or system that comprises a list of elements, which may include not only those elements but also other elements not expressly listed or inherent to such process, method, article, or system. An element preceded by "comprises a ..." does not, without more constraints, preclude the existence of additional identical elements in the process, method, article, or system that comprises the element.

The serial numbers of the above embodiments of the present disclosure do not indicate that an embodiment is better than another embodiment but for description. The above description only involves specific embodiments of the present disclosure, but the protection scope of the present disclosure is not limited to thereto. Any person skilled in the art can easily concept various equivalent modifications or replacements within the technical scope disclosed in the present disclosure, and all these modifications or replacements shall fall into the protection scope of the present disclosure. Therefore, the protection scope of the present disclosure shall be confined in the protection scope of the claims.

## Claims

1. A service scheduling method applied in a cross board of a packet optical transport network device, comprising:
acquiring a service data packet sent from a sending end line card in the packet optical transport network device by means of a first interface;
determining a target interface among a plurality of second interfaces of different interface types connected to a receiving end line card; and
sending the service data packet to the receiving end line card by means of the target interface.

2. The service scheduling method according to claim 1, wherein the plurality of the second interfaces comprise at least one Ethernet interface and at least one Interlaken interface.

3. The service scheduling method according to claim 1, wherein the determining the target interface among the plurality of the second interfaces of different interface types connected to the receiving end line card further comprises:
acquiring an overhead byte in the service data packet, wherein the overhead byte comprises a target interface address; and
determining a second interface corresponding to the target interface address as the target interface.

4. The service scheduling method according to claim 3, wherein the overhead byte is added into the service data packet by the sending end line card; or the overhead byte is added into the service data packet by the cross board.

5. The service scheduling method according to claim 4, wherein before acquiring the overhead byte in the service data packet, the method further comprises:
acquiring preset service cross configuration information in a case where the first interface is the Interlaken interface; and
adding the overhead byte into the service data packet according to the service cross configuration information.

6. The service scheduling method according to claim 3, wherein the sending the service data packet to the receiving end line card by means of the target interface further comprises:
sending the service data packet to the receiving end line card by means of the target interface in a case where the target interface is the Ethernet interface; and
performing a stripping processing on the service data packet and sending a processed service data packet to the receiving end line card by means of the target interface in a case where the target interface is the Interlaken interface, the stripping processing comprising stripping the overhead byte in the service data packet.

7. The service scheduling method according to claim 1, wherein the sending the service data packet to the receiving end line card by means of the target interface further comprises:
sending the service data packet to the receiving end line card by means of the target interface according to a preset first sending strategy in a case where the first interface is an Ethernet interface; and
sending the service data packet to the receiving end line card by means of the target interface according to a preset second sending strategy in a case where the first interface is an Interlaken interface.

8. The service scheduling method according to claim 7, wherein the receiving end line card comprises a first receiving end line card and a second receiving end line card; and
the sending the service data packet to the receiving end line card by means of the target interface according to the preset first sending strategy further comprises:
sending the service data packet to the first receiving end line card by means of the target interface with the interface type of the Ethernet interface, such that a stripping processing and a recombination are performed on the service data packet by the first receiving end line card to acquire a service data frame corresponding to the service data packet;
copying the service data packet to acquire a first copy data packet corresponding to the service data packet, and performing a stripping processing on the first copy data packet; and
sending a processed first copy data packet to the second receiving end line card by means of the target interface with the interface type of the Interlaken interface, such that a recombination is performed on the processed first copy data packet by the second receiving end line card to acquire a service data frame corresponding to the processed first copy data packet.

9. The service scheduling method according to claim 8, wherein after sending the service data packet to the receiving end line card by means of the target interface according to the preset first sending strategy, the method further comprises:
receiving a first service data packet sent from the first receiving end line card and receiving a second service data packet sent from the second receiving end line card;
acquiring service alarming information in the first receiving end line card or in the second receiving end line card, and determining a path type of the first receiving end line card and a path type of the second receiving end line card according to the service alarming information, wherein the path type comprises a working path and a protection path;
sending the first service data packet to the sending end line card by means of the first interface, and discarding the second service data packet, in a case where the path type corresponding to the first receiving end line card is the working path; and
adding an overhead byte into the second service data packet and then sending the second service data packet added with the overhead byte to the sending end line card by means of the first interface, and discarding the first service data packet, in a case where the path type corresponding to the second receiving end line card is the working path.

10. The service scheduling method according to claim 7, wherein the receiving end line card comprises a first receiving end line card and a second receiving end line card; and
the sending the service data packet to the receiving end line card by means of the target interface according to the preset second sending strategy further comprises:
adding an overhead byte into the service data packet, so as to acquire the service data packet added with the byte;
copying the service data packet added with the byte, so as to acquire a second copy data packet corresponding to the service data packet added with the byte;
sending the service data packet added with the byte to the first receiving end line card by means of the target interface with the interface type of the Ethernet interface, such that a stripping processing and a recombination are performed on the service data packet by the first receiving end line card perform to acquire a service data frame corresponding to the service data packet added with the byte; and
performing a stripping processing on the second copy data packet, and sending a processed second copy data packet to the second receiving end line card by means of the target interface with the interface type of the Interlaken interface, such that a recombination is performed on the processed second copy data packet by the second receiving end line card to acquire a service data frame corresponding to the second copy data packet processed.

11. A service scheduling method applied to a sending end line card in a packet optical transport network device, comprising:
generating a service data packet comprising time slot information;
acquiring a preset service cross configuration table, and judging whether a target interface address corresponding to the time slot information exists in the service cross configuration table or not, the target interface address being configured to determine a target interface among second interfaces; and
sending the service data packet to a cross board by means of a first interface in a case where the target interface address corresponding to the time slot information exists in the service cross configuration table, such that the cross board sends the service data packet to a receiving end line card by means of the target interface.

12. The service scheduling method according to claim 11, wherein the judging whether the target interface address corresponding to the time slot information exists in the service cross configuration table or not further comprises:
discarding the service data packet in a case where no target interface address corresponding to the time slot information exists in the service cross configuration table.

13. The service scheduling method according to claim 11, wherein the sending the service data packet to the cross board by means of the first interface further comprises:
adding an overhead byte into the service data packet, and sending the service data packet added with the byte to the cross board by means of the first interface, in a case where the first interface is an Ethernet interface; and
sending the service data packet to the cross board by means of the first interface, in a case where the first interface is an Interlaken interface.

14. The service scheduling method according to claim 11, wherein after sending the service data packet to the cross board by means of the first interface, the method further comprises:
receiving a fifth service data packet returned from the cross board by means of the first interface;
performing a time slot check on the fifth service data packet according to the preset service cross configuration table in a case where the first interface is an Ethernet interface, and performing a stripping processing and a recombination on the fifth service data packet in a case where the time slot check is satisfied, so as to acquire a service data frame corresponding to the fifth service data packet; and
performing a recombination on the fifth service data packet in a case where the first interface is an Interlaken interface, so as to acquire a service data frame corresponding to the fifth service data packet.

15. A packet optical transport network device comprising a cross board and a line card, wherein
the cross board comprises a processor, a memory, a computer program stored on the memory and executable by the processor, and a data bus for communication connection between the processor and the memory, the computer program, when executed by the processor, implements the service scheduling method according to any one of claims 1 to 10; and
the line card comprises a processor, a memory, a computer program stored on the memory and executable by the processor, and a data bus for communication connection between the processor and the memory, the computer program, when executed by the processor, implements the service scheduling method according to any one of claims 11 to 14.

16. A computer readable storage medium storing one or more programs, wherein the one or more programs is executable by one or more processors to implement:
the service scheduling method according to any one of claims 1 to 10; or
the service scheduling method according to any one of claims 11 to 14.
